# EUROPÄISCHE PATENTANMELDUNG

(11) **EP 4 467 367 A1**
(43) Veröffentlichungstag der Anmeldung: **27.11.2024**
(21) Anmeldenummer: 24000060.4
(22) Anmeldetag: 27.05.2024
(51) Int. Cl.: B60H 1/00, B60H 1/32

(54) **AUFDACHKLIMAANLAGE ZUM HEIZEN UND/ODER KÜHLEN EINES FAHRZEUGINNENRAUMS**

(30) Priorität: 25.05.2023 DE 102023002146; 05.12.2023 DE 202023002534 U
(71) Anmelder: Valeo Thermal Commercial Vehicles Germany GmbH, 82205 Gilching (DE)
(72) Erfinder: Scheid, Helmut, 86920 Denklingen (DE)
(74) Vertreter: Strasser, Wolfgang

(57) **Zusammenfassung**

Um bei einer Aufdachklimaanlage zum Kühlen und/oder Heizen eines Fahrzeuginnenraums, insbesondere des Fahrgast-Innenraums eines Omnibusses, mit wenigstens einer auf dem Fahrzeugdach (1) positionierten Kältemittelkreislauf-Einheit (10), die unter anderem einen von einem Elektromotor (12) angetriebenen Kompressor (13), zwei mit diesem über Rohrleitungen verbundene Wärmetauscher (15,16), nämlich einen Außenbereich-Wärmetauscher (15) und einen Innenbereich-Wärmetauscher (16), und ein Expansionsventil (18) umfasst, einen Betrieb mit einem entzündlichen bzw. brennbaren Kältemittel zu ermöglichen, ist vorgesehen, dass der Innenbereich-Wärmetauscher (16) eine Primärseite (20), die Teil der Kältemittelkreislauf-Einheit ist (10), und eine gegenüber der Primärseite (20) hermetisch abgedichtete Sekundärseite (21) aufweist, die Teil eines von einem Wärmeträger-Medium durchströmten Sekundärkreislaufes ist, der zur Konditionierung der Luft des Fahrzeuginnenraums vorgesehen ist.

## Beschreibung

Die Erfindung betrifft eine Aufdachklimaanlage zum Heizen und/oder Kühlen eines Fahrzeug-Innenraums, insbesondere des Fahrgast-Innenraums eines Omnibusses gemäß dem Oberbegriff von Anspruch 1.

Solche Aufdachklimaanlagen weisen unter anderem eine Kältemittelkreislauf-Einheit auf, die einen von einem Elektromotor angetriebenen Kompressor, zwei mit diesem über Rohrleitungen verbundene Wärmetauscher und ein Expansionsorgan umfasst, und können je nach Bauart entweder für eine alleinige Kühlung des Fahrzeug-Innenraums oder so ausgebildet sein, dass sie diesen je nach Bedarf zu kühlen oder zu heizen vermögen.

Um beide Varianten sprachlich zu erfassen, werden in der folgenden Beschreibung für die Wärmetauscher der Kältemittelkreislauf-Einheit die Ausdrücke "Verdampfer" und "Kondensator" vermieden. Stattdessen werden die Bezeichnungen "Außenbereich-Wärmetauscher" und "Innenbereich-Wärmetauscher" verwendet.

Das ist so zu verstehen, dass bei einer nur zum Kühlen dienenden Anlage der Außenbereich-Wärmetauscher immer als Kondensator und der Innenbereich-Wärmetauscher immer als Verdampfer arbeitet, während bei einer Anlage, die sowohl einen Kühl- als auch einen Heizbetrieb ermöglicht, jeder dieser beiden Wärmetauscher in Abhängigkeit von der momentanen Betriebsart (Kühlen oder Heizen) entweder als Kondensator oder als Verdampfer verwendet wird. Diese Funktionsvertauschung erfolgt vorzugsweise dadurch, dass mithilfe von steuerbaren Ventilen die Kältemittel-Ströme entsprechend geändert werden, wie dies prinzipiell aus dem Stand der Technik bekannt ist.

Eine dem Oberbegriff von Anspruch 1 entsprechende Aufdachklimaanlage, die beispielsweise der deutschen Offenlegungsschrift DE 10 2021 002 168 A1 entnommen werden kann, umfasst ein oder mehrere äußerst kompakte Klimaanlagen-Module, die hinsichtlich ihrer Positionierung auf dem Fahrzeugdach bei jeweils minimalem Platzbedarf eine große Flexibilität ermöglichen. In dieser Druckschrift wird kein spezielles Kältemittel erwähnt, sodass von der Verwendung eines der zurzeit bei Aufdachklimaanlagen üblichen Kältemittel ausgegangen werden kann.

Hierzu gehören beispielsweise die Kältemittel R134a und R407c, die zwar einen vergleichsweise hohen GWP-Wert (global warming potential) von 1430 bzw. 1774 aufweisen, aber den Vorteil besitzen, dass sie unter die Sicherheitsstufe A1 fallen, das heißt nicht brennbar sind.

Das in Personenkraftwagen verwendete Kältemittel 1234yf hat einen wesentlich niedrigeren GWP-Wert von 4 und ist nur schwer entflammbar. Nachteilig ist, dass es bei Kontakt mit Luft sehr schnell zerfällt, wobei Trifluoressigsäure TFA entsteht, die in der Natur nicht abgebaut wird und im Verdacht steht, sich im Boden und Trinkwasser anzusammeln. Im Falle eines Brandes entsteht aus 1234yf hochgiftige Flusssäure.

Die F-Gase-Verordnung sieht vor, dass die Verwendung von umweltschädlichen Kältemitteln mit einem GWP-Wert größer 150 in zunehmendem Maße eingeschränkt werden soll, was zu einer Verknappung und erheblichen Preiserhöhung der dann noch zum Einsatz zur Verfügung stehenden Verbindungen führen wird.

Trotz langjähriger Forschung gibt es noch keine nicht entzündlichen Ersatzkältemittel, die sowohl hinsichtlich ihrer Umweltrelevanz als auch ihrer thermodynamischen Eigenschaften allen Anforderungen vollumfänglich entsprechen.

Einen Ausweg können prinzipiell die Kältemittel der Gruppe A3 bieten, die ausgezeichnete thermodynamischen Eigenschaften besitzen und äußerst günstige GWP-Werte aufweisen (der beispielsweise für Isopropan gleich 3 ist). Allerdings sind diese Kältemittel brennbar und können mit Luft explosionsfähige Gemische bilden, sodass ihr Einsatz für herkömmliche Klimaanlagen zum Heizen und/oder Kühlen von Fahrgast-Innenräumen, insbesondere von Omnibussen bisher aus Sicherheitsgründen nicht in Betracht gezogen wurde.

Demgegenüber liegt der Erfindung die Aufgabe zugrunde, eine Aufdachklimaanlage der eingangs genannten Art so weiterzubilden, dass sie für die Verwendung brennbarer bzw. entzündlicher Kältemittel, insbesondere solcher der Gruppe A3 geeignet ist, ohne dass sich hieraus ein nicht akzeptables Brand- oder gar Explosionsrisiko ergibt und dass eine Gefährdung von Personen und/oder Sachgütern ausgeschlossen werden kann.

Zur Lösung dieser Aufgabe sieht die Erfindung die im Anspruch 1 zusammengefassten Merkmale vor.

Bei herkömmlichen Aufdachklimaanlagen wird die den Innenbereich-Wärmetauscher durchströmende Luft direkt dem Fahrzeuginnenraum zugeführt; im Falle einer Undichtigkeit austretendes Kältemittel-Gas könnte somit in das Fahrzeuginnere gelangen und, wenn es brennbar ist, dort mit Luft ein zündfähiges Gemisch bilden.

Demgegenüber bietet die erfindungsgemäße Anordnung mit einem Sekundärkreislauf den Vorteil, dass sie es ermöglicht, den Innenbereich-Wärmetauscher der Kältemittelkreislauf-Einheit auf dem Fahrzeugdach von allen Öffnungen, durch die Luft in den Fahrzeuginnenraum strömen bzw. eintreten kann, getrennt zu halten, und dadurch auszuschließen, dass im Fall eines Lecks austretendes Kältemittel in das Innere des Fahrzeugs gelangt und sich dort ansammelt und/oder ein zünd- oder gar explosionsfähiges Gas-Luftgemisch bildet.

Durch eine offene Bauart des Gehäuses der Kältemittelkreislauf-Einheit wird für eine gute passive Belüftung gesorgt, die gewünschten Falls durch die Verwendung von einem oder mehreren Gebläsen aktiv unterstützt werden kann. Dadurch können sich auch außerhalb des Fahrzeuginnenraums keine gefährlichen Kältemittel-Luftgemische bilden.

Alle im Gehäuse der Kältemittelkreislauf-Einheit befindlichen Komponenten, insbesondere Verdichter, Ventile, Wärmetauscher und die sie verbindenden Rohrleitungen sind jeweils für sich hermetisch gekapselt bzw. gasdicht verlötet oder verschweißt. Potenzielle Zündquellen werden außerhalb der Kältemittelkreislauf-Einheit und in einem großen Sicherheitsabstand von dieser angeordnet und mit dichten Steckverbindungen ausgeführt. In vorteilhafter Weise kann auch zwischen der Kältemittelkreislauf-Einheit und dem Bereich, in dem sich potenzielle Zündquellen befinden, eine dichte Abschottungs-Einrichtung vorgesehen sein.

Dadurch, dass die Kältemittelkreislauf-Einheit als wartungsfreies, ohne Eingriff in den Kältemittelkreislauf abnehmbares und austauschbares Modul ausgebildet und ihr Gehäuse beispielsweise durch Verwendung spezieller Schlösser und/oder Verplombung nur für speziell geschultes Personal zugänglich ist, wird die Gefahr der Erzeugung von undichten Stellen durch eine unsachgemäße Handhabung auf ein Minimum verringert.

Insbesondere ist bevorzugt, dass der Innenbereich-Wärmetauscher der Kältemittelkreislauf-Einheit so ausgebildet ist, dass eine physikalische Vermischung der beiden Wärmeträger-Medien praktisch ausgeschlossen werden kann. Insbesondere Platten-Wärmetauscher sind für eine solche absolute Trennung zwischen den Wärmeträgern der Kältemittelkreislauf-Einheit (brennbares bzw. entzündliches Kältemittel) einerseits und des Sekundärkreislaufs (beispielsweise mit einem Frostschutzmittel versetztes Wasser) andererseits gut geeignet.

Eine bevorzugte Maßnahme zur Verringerung der Brand- bzw. Explosionsgefahr besteht darin, die Kältemittel-Füllmenge in den Komponenten der Kältemittelkreislauf-Einheit auf ein Minimum zu reduzieren. Überdies können Überwachungseinheiten vorgesehen sein, die mithilfe von Sensoren Drücke, Temperaturen und/oder die Kältemittel-Füllmenge und dergleichen überwachen und dann, wenn einer oder mehrere der von ihr gewonnenen Messwerte auf einen Kältemittel-Austritt hinweisen, die zur aktiven Belüftung des Gehäuses der Kältemittelkreislauf-Einheit vorgesehenen Gebläse bzw. Ventilatoren einschalten und ansonsten ein sofortiges Abschalten der Anlage erzwingen und/oder die Stromzufuhr zur Kältemittelkreislauf-Einheit unterbrechen.

Insgesamt ist wird durch die erfindungsgemäße Anordnung eine dreifache Sicherheit erzielt:
1. Durch die die Kälte Kreislauf-Einheit unmittelbar betreffenden Maßnahmen wird die Gefahr minimiert, dass es überhaupt zu einer Austritt des brennbaren Kältemittels kommt.
2. Durch die räumliche Trennung potenzieller Zündquellen von der Kältemittelkreislauf-Einheit wird die Wahrscheinlichkeit extrem minimiert, dass es zu einer Entzündung von eventuell doch austretendem Kältemittel kommt.
3. Durch die gute passive und/oder aktive Belüftung des Gehäuses der Kältemittelkreislauf-Einheit wird eventuell austretendes Kältemittel-Glas so stark verdünnt, dass auch bei einem Strömungskontakt mit potenziellen Zündquellen keine Entzündung oder gar Explosion zu befürchten steht.

Für jede dieser Maßnahmengruppen ist die Versagenswahrscheinlichkeit außerordentlich klein; zur Abschätzung des Risikos, dass es zu einem Brand- oder Explosionsereignis kommt, muss das Produkt dieser äußerst kleinen Wahrscheinlichkeitswerte gebildet werden, das im Bereich von <10⁻¹⁷ liegen dürfte.

Die Erfindung wird im Folgenden anhand von Ausführungsbeispielen unter Bezugnahme auf die Zeichnung näher erläutert; in dieser zeigen:
- Fig. 1: eine stark schematisierte Draufsicht auf eine erfindungsgemäße, auf dem Dach eines Fahrzeugs angeordnete Aufdachklimaanlage,
- Fig. 2: eine vergrößerte Darstellung der Kältemittelkreislauf-Einheit der Aufdachklimaanlage aus Fig. 1 im Heizmodus,
- Fig. 3: eine der Fig. 2 entsprechende Darstellung der Kältemittelkreislauf-Einheit der Aufdachklimaanlage aus Fig. 1 im Kühlmodus, und
- Fig. 4: analog zu Fig. 1 eine stark schematisierte Draufsicht auf ein weiteres Ausführungsbeispiel einer auf dem Dach eines Fahrzeugs angeordneten Aufdachklimaanlage.

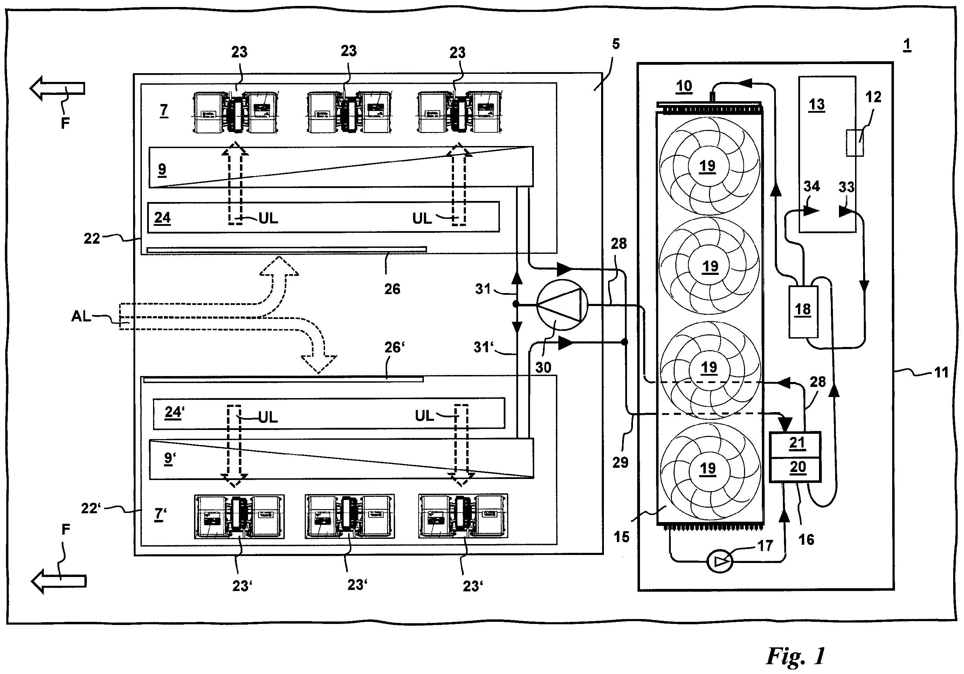

In Fig. 1 ist eine Draufsicht auf einen durch Freihandlinien begrenzten Bereich der Oberseite eines Fahrzeugdaches 1 wiedergegeben, wobei die Position dieses Bereiches lediglich derart vorgegeben ist, dass die Pfeile F in Vorwärtsfahrtrichtung des Fahrzeuges zeigen.

Die dargestellte Aufdachklimaanlage umfasst im Wesentlichen einen vorderen Abschnitt 5 mit zwei Sekundäreinheiten 7, 7' und eine in Fahrtrichtung F dahinter angeordnete Kältemittelkreislauf-Einheit 10, die ein Gehäuse 11 aufweist, das unter anderem einen von einem Elektromotor 12 angetriebenen Kompressor 13, zwei mit diesem über Rohrleitungen verbundene Wärmetauscher, nämlich einen horizontal liegenden Außenbereich-Wärmetauscher 15, und einen als Innenbereich-Wärmetauscher 16 dienenden Platten-Wärmetauscher, ein elektrisch steuerbares Expansionsventil 17, ein 4-Wege-Umschaltventil 18 und vier Axialgebläse 19 umfasst, die im montierten Zustand der Klimaanlage so oberhalb des Außenbereich-Wärmetauschers 15 angeordnet sind, dass sie die zwischen dem Fahrzeugdach 1 und der Unterseite des Außenbereich-Wärmetauschers 15 zuströmende Luft in etwa vertikal nach oben durch den Außenbereich-Wärmetauscher 15 hindurch ansaugen und danach in die Umgebungsluft abgeben.

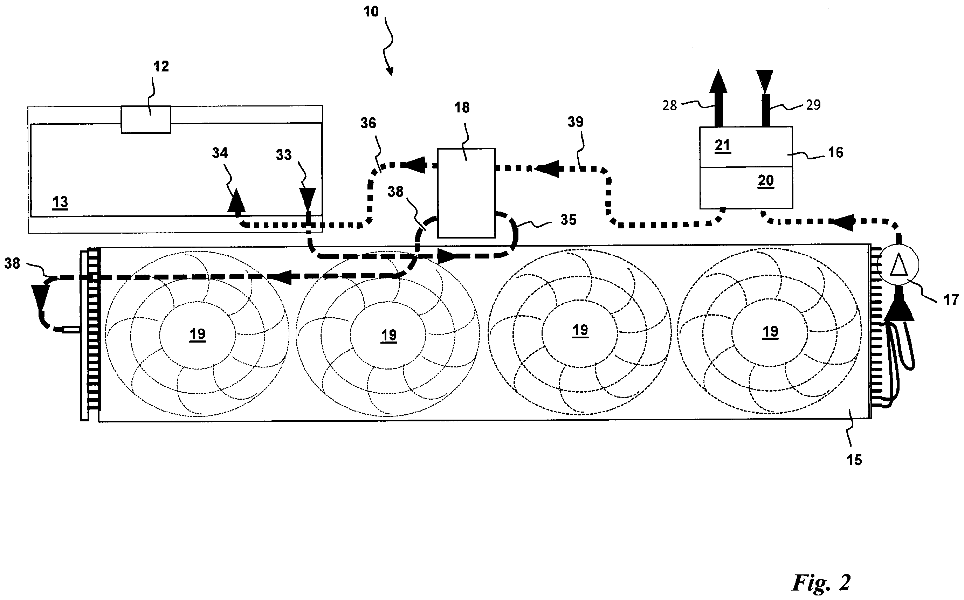

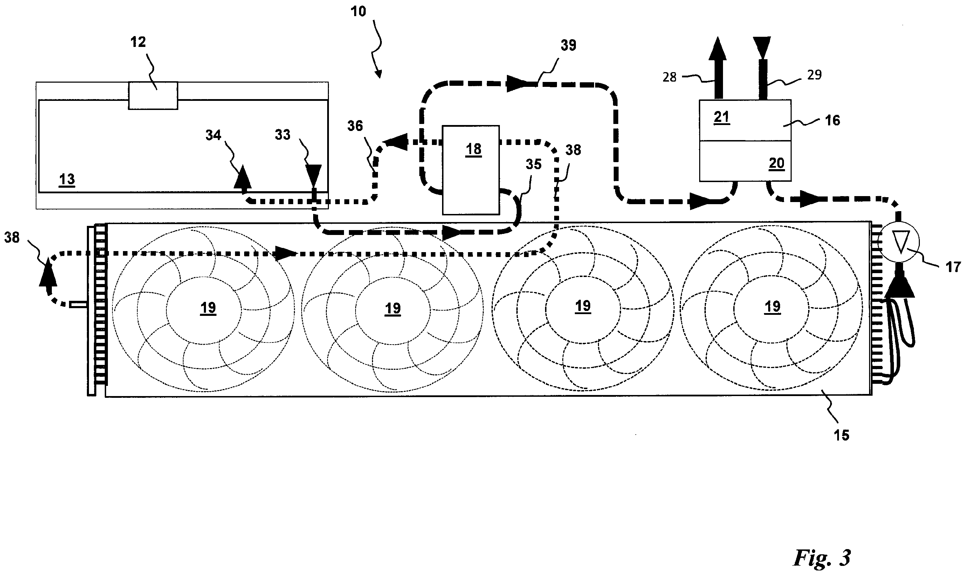

Auf diese Weise wird der Außenbereich-Wärmetauscher 15 je nach Betriebsart erwärmt oder gekühlt, wie dies unter Bezugnahme auf die Fig. 2 und Fig. 3 noch genauer erläutert wird.

Jede der zueinander bezüglich der zur Fahrtrichtung F parallelen Zentralachse des vorderen Abschnittes 5 spiegelbildlich ausgebildeten Sekundäreinheiten 7, 7' weist ein Gehäuse 22, 22' auf, in dessen Inneren ein länglicher, sich in Fahrtrichtung F erstreckender, stehender Sekundärwärmetauscher 9 bzw. 9' und mehrere Radialgebläse-Einheiten 23 bzw. 23' angeordnet sind, wobei letztere im Betrieb durch im Boden der Gehäuse 22 bzw. 22' vorgesehene Umluft-Ansaugöffnungen 24 bzw. 24' Luft aus dem Fahrzeuginneren so ansaugen, dass sie den zugehörigen Sekundärwärmetauscher 9 bzw. 9' in etwa horizontal durchströmt, wie dies durch die Pfeile UL angedeutet ist, um sie danach durch im Boden des Gehäuses 22, 22' vorgesehene, in der Draufsicht der Fig. 1 durch die Radialgebläse-Einheiten 23 bzw. 23' verdeckte Umluft-Rückführöffnungen wieder in den Fahrzeuginnenraum abzugeben.

Die Gehäuse 22 und 22' der Sekundäreinheiten 7 bzw. 7' weisen quer zur Fahrtrichtung einen Abstand auf, sodass dann, wenn sich das Fahrzeug vorwärts bewegt, zwischen ihnen Außenluft (siehe die Pfeile AL) hindurchströmen, durch in der Seitenwand vorgesehenen Schlitze in das Innere der Gehäuse 22, 22' eintreten und sich dort mit der Umluft UL vermischen kann. Mithilfe von nicht dargestellten Schiebern und/oder Klappen kann die Menge der beigemischten Außenluft verändert werden, wie dies durch die unterschiedliche Größe der Pfeile AL angedeutet ist.

Der Innenbereich-Wärmetauschers 16 besitzt eine Primärseite 20, die Teil der Kältemittelkreislauf-Einheit 10 ist und eine von dieser hermetisch getrennte Sekundärseite 21, die über eine Rohrleitung 28 mit einer Wasserpumpe 30 des Sekundärkreislaufes verbunden ist, die das Wärmeträger-Medium des Sekundärkreislaufes über die Rohrleitungen 31, 31' den Vorlauf-Eingängen der Sekundärwärmetauscher 9, 9' zuführt, deren Rücklauf-Ausgänge über eine Rohrleitung 29 mit dem Rücklaufeingang des Innenbereich-Wärmetauschers 16 in Verbindung stehen. Als Wärmeträgermedium kommt hier erfindungsgemäß Wasser zum Einsatz, das mit einem Frostschutzmittel versetzt sein kann.

Die Fig. 1 gezeigte Durchströmungsrichtung des Expansionsventils 17 der Kältemittelkreislauf-Einheit 10 und die Strömungspfeile des dortigen Kältemittel-Kreislaufes repräsentieren den Kühlbetrieb der erfindungsgemäßen Aufdachklimaanlage, wie dies unter Bezugnahme auf Fig. 3 noch genauer erläutert wird.

Wesentlich ist die räumliche Trennung der Sekundäreinheiten 7, 7' von der Kältemittelkreislauf-Einheit 10, deren Gehäuse 11 zwar eine offene Bauart aufweist, um eine aktive und/oder passive Durchlüftung des Gehäuses zu gewährleisten, durch deren Positionierung in Fahrtrichtung hinter den Sekundäreinheiten 7, 7' aber sichergestellt ist, dass im Falle einer Leckage austretendes Kältemittel schon allein durch den Fahrtwind daran gehindert wird, zu den Umluftströmen UL zu gelangen, die von den Radialgebläse-Einheiten 23, 23' in das Fahrzeuginnere geführt werden.

In Fig. 2 sind Details der Kältemittelkreislauf-Einheit 10 im Kühlmodus dargestellt. Dabei ist der Deutlichkeit halber die zu den Rohrleitungen 28, 29 des Sekundärkreislaufs führende Schnittstelle des Innenbereich-Wärmetauschers 16 im Vergleich zu Fig. 1 vom Außenbereich-Wärmetauscher 15 weggeklappt dargestellt.

Der Kompressor 13 besitzt einen Druckausgang 33 und einen Ansaugeingang 34, die über eine Leitung 35, in der in diesem Betriebszustand ein hoher Druck herrscht, bzw. eine Leitung 36 mit niedrigem Innendruck, über das 4 Wege--Umschaltventil 18 mit einer zum Strömungseingang des Außenbereich-Wärmetauschers 15 führenden Leitung 38 mit hohem Innendruck bzw. einer Leitung 39 mit niedrigem Innendruck verbunden sind; letztere ist mit dem Innenbereich-Wärmetauscher 16 und über diesen mit dem Ausgang des Expansionsventils 17 verbunden, dessen Eingang an den Ausgang des Außenbereich-Wärmetauschers 15 angeschlossen ist, der somit in diesem Betriebsmodus als Kondensator arbeitet, während der Innenbereich-Wärmetauscher 16 als Verdampfer betrieben wird.

Für den in Fig. 3 gezeigten Heizmodus sind das 4-Wege-Umschaltventil 18 und das Expansionsventil 17 so umgeschaltet, dass der Druckausgang 33 des Kompressors 13 über die Leitung 35 mit der jetzt als Hochdruckleitung arbeitenden, zum Innenbereich-Wärmetauscher 16 führenden Leitung 39 und der Ansaugeingang 34 des Kompressors 13 über die Leitung 36 mit der jetzt einen niedrigen Innendruck aufweisenden Leitung 38 verbunden ist, die zum Ausgang des Außenbereich-Wärmetauschers 15 führt, dessen gegenüberliegende Seite mit dem Niederdruckausgang des Expansionsventils 17 verbunden ist.

Somit arbeitet hier der Innenbereich-Wärmetauscher 16 als Kondensator und der Außenbereich-Wärmetauscher 15 als Verdampfer.

Für beide Betriebsarten gilt, dass die im Bereich der Kältemittelkreislauf-Einheit 10 unbedingt erforderlichen elektrischen Anschlüsse, des Elektromotors 12, des steuerbaren 4-Wege-Umschaltventils 18 und des elektrisch steuerbaren Expansionsventils 17 in besonderem Maße abgedichtet ausgeführt sind. Darüber hinaus ist jede der eben genannten Einheiten vorzugsweise hermetisch dicht gekapselt und mit ihren zugehörigen Verbindungsleitungen 35, 36, 38 und 39 in nicht lösbarer Weise hermetisch dicht verbunden. Entsprechendes gilt auch für die beiden Wärmetauscher 15 und 16.

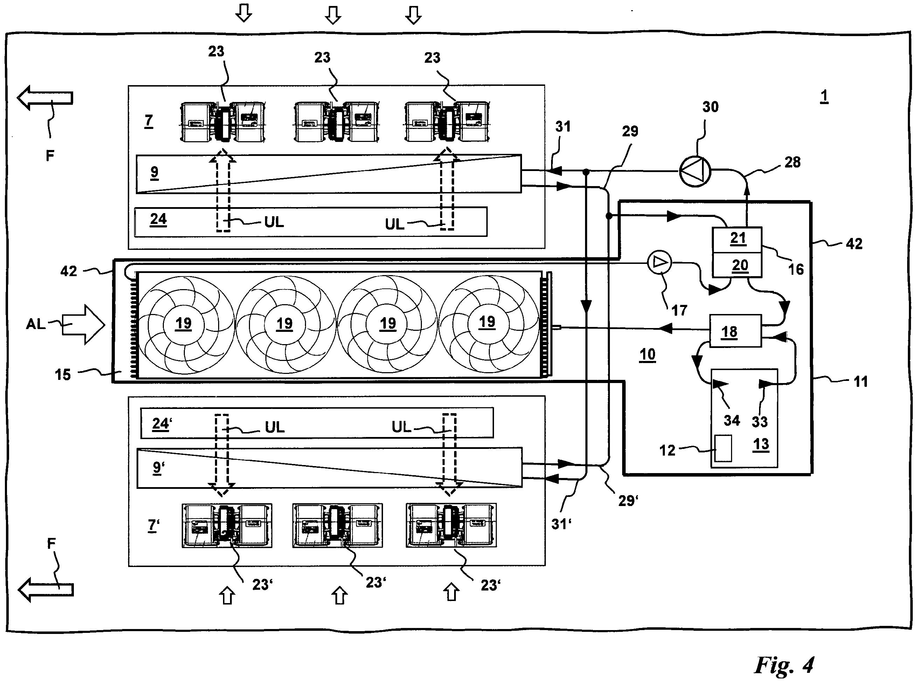

Fig. 4 ist eine weitere Ausführungsform einer erfindungsgemäßen Aufdachklimaanlage wiedergegeben, die im Wesentlichen der in Fig. 1 gezeigten Ausführungsformen entspricht. Gleiche Teile bzw. Einheiten sind in den beiden Figuren mit denselben Bezugszeichen bezeichnet. Bestandteile bzw. Einheiten und Funktionen der wiedergegebenen Aufdachklimaanlagen sind in beiden Fällen identisch, sodass diesbezüglich auf die Ausführungen zu Fig. 1 verwiesen werden kann.

Der wesentliche Unterschied zwischen den beiden Ausführungsformen besteht darin, dass in Fig. 4 der Außenbereich-Wärmetauscher 15 so zwischen den beiden Sekundäreinheiten 7, 7' knapp über dem Fahrzeugdach 1 angeordnet ist, dass sich seine Längsrichtung in Fahrtrichtung F erstreckt. Insbesondere dann, wenn sich das Fahrzeug in dieser Richtung bewegt, sorgt die in den zwischen dem Außenbereich-Wärmetauscher 15 und dem Fahrzeugdach 1 gebildeten Freiraum eintretende Außenluft AL, die durch die Axialgebläse 19 durch den Außenbereich-Wärmetauscher 15 hindurch nach oben abgesaugt und in die Atmosphäre abgegeben wird, nicht nur für eine gute Belüftung, sondern auch dafür, dass eventuell austretendes brennbares Kältemittel schnell sehr stark verdünnt und somit die Bildung von explosionsfähigen Kältemittel/Luft-Gemischen verhindert wird. Dies soll insbesondere auch durch die verstärkten Begrenzungslinien 42, mit denen in Fig. 4 das Gehäuse 11 der Kältemittelkreislauf-Einheit 10 wiedergegeben ist, verdeutlicht werden, die erfindungsgemäß vorgesehene bauliche Maßnahmen, wie zum Beispiel Leit- und Abschirmungsbleche symbolisieren.

## Patentansprüche

1. Aufdachklimaanlage zum Kühlen und/oder Heizen eines Fahrzeuginnenraums, insbesondere des Fahrgast-Innenraums eines Omnibusses, mit wenigstens einer auf dem Fahrzeugdach (1) positionierten Kältemittelkreislauf-Einheit (10), die unter anderem einen von einem Elektromotor (12) angetriebenen Kompressor (13), zwei mit diesem über Rohrleitungen verbundene Wärmetauscher nämlich einen Außenbereich-Wärmetauscher (15) und einen Innenbereich-Wärmetauscher (16), und ein Expansionsventil (17) umfasst,
**dadurch gekennzeichnet, dass**
der Innenbereich-Wärmetauscher (16) eine Primärseite (20), die Teil des Kältemittel-Kreislaufs ist, und eine gegenüber der Primärseite (20) hermetisch abgedichtete Sekundärseite (21) aufweist, die Teil eines von einem Wärmeträger-Medium durchströmten Sekundärkreislaufes ist, der zur Konditionierung der Luft des Fahrzeuginnenraums vorgesehen ist.

2. Aufdachklimaanlage nach Anspruch 1, **dadurch gekennzeichnet, dass** das Gehäuse (11), in welchem die Komponenten der Kältemittelkreislauf-Einheit (10) untergebracht sind, eine offene Bauart aufweist, um eine aktive und/oder passive Durchlüftung des Gehäuses (11) zu gewährleisten.

3. Aufdachklimaanlage nach Anspruch 2, **dadurch gekennzeichnet, dass** wenigstens ein Gebläse mit hermetisch abgedichteter Motor so angeordnet ist und betrieben wird, dass sowohl außerhalb als auch während des Betriebes der Aufdachklimaanlage eventuell aus dem Kältemittel-Kreislauf austretendes Kältemittel unter die Zündgrenze verdünnt und vom Fahrzeug weggeblasen wird.

4. Aufdachklimaanlage nach einem der vorhergehenden Ansprüche, **dadurch gekennzeichnet, dass** das Gehäuse (11), in welchem die Komponenten (12, 13, 15, 18, 20) des Kältemittel-Kreislaufs untergebracht sind, eine spezielle passive Entlüftungsvorrichtung aufweist, die eventuell austretendes Kältemittel in einen sicheren Bereich ableitet.

5. Aufdachklimaanlage nach Anspruch einem der vorhergehenden Ansprüche, **dadurch gekennzeichnet, dass** jede der Komponenten (12, 13, 15, 18, 20) des Kältemittel-Kreislaufs als solche hermetisch dicht gekapselt und mit ihren Verbindungsrohrleitungen in nicht lösbarer Weise hermetisch dicht verbunden ist.

6. Aufdachklimaanlage nach einem der vorhergehenden Ansprüche, **dadurch gekennzeichnet, dass** der Kältemittel-Kreislauf wartungsfrei ausgebildet und sein Gehäuse (11) durch die Verwendung spezieller Schlösser und/oder Verplombungen nur für speziell geschultes Personal zugänglich ist.

7. Aufdachklimaanlage nach einem der vorhergehenden Ansprüche, **dadurch gekennzeichnet, dass** die Kältemittelkreislauf-Einheit (10) so ausgebildet ist, dass sie ohne Eingriffe in den Kältemittelkreislauf abgenommen und ausgetauscht werden kann.

8. Aufdachklimaanlage nach einem der vorhergehenden Ansprüche, **dadurch gekennzeichnet, dass** der Innenbereich-Wärmetauscher (16) als Platten-Wärmetauscher ausgebildet ist.

9. Aufdachklimaanlage nach einem der vorhergehenden Ansprüche, **dadurch gekennzeichnet, dass** das Wärmeträger-Medium des Sekundärkreislaufes Wasser ist, das mit einem Frostschutzmittel versetzt sein kann

10. Aufdachklimaanlage nach einem der vorhergehenden Ansprüche, **dadurch gekennzeichnet, dass** die Kältemittel-Füllmenge der Kältemittelkreislauf-Einheit (10) auf ein Minimum reduziert ist.

11. Aufdachklimaanlage nach einem der vorhergehenden Ansprüche, **dadurch gekennzeichnet, dass** sie eine Überwachungseinheit umfasst, die Drücke, Temperaturen und die Kältemittel-Füllmenge in der Kältemittelkreislauf-Einheit (10) überwacht und dann, wenn sie Werte ermittelt, die auf einen Kältemittel-Leck hinweisen, ein sofortiges Abschalten der Aufdachklimaanlage erzwingt bzw. deren Einschalten verhindert.

12. Aufdachklimaanlage nach einem der vorhergehenden Ansprüche, **dadurch gekennzeichnet, dass** die Kältemittelkreislauf-Einheit (10) zu allen potenziellen Zündquellen in einem Sicherheitsabstand angeordnet ist.

13. Aufdachklimaanlage nach einem der vorhergehenden Ansprüche, **dadurch gekennzeichnet, dass** wenigstens ein weiterer Sekundärkreislauf vorhanden ist, der bei batteriebetriebenen Fahrzeugen zur Kühlung der Fahrzeugbatterien während des Ladevorgangs dient.
